# EUROPÄISCHE PATENTSCHRIFT

(11) **EP 2 175 158 B1**
(45) Veröffentlichungstag und Bekanntmachung des Hinweises auf die Patenterteilung: **12.01.2011**
(21) Anmeldenummer: 09010859.8
(22) Anmeldetag: 25.08.2009
(51) Int. Cl.: F16D 66/02

(54) **Reibbelagsverschleißsensor**
Friction lining wear sensor
Capteur d'usure de garniture de friction

(30) Priorität: 08.10.2008 DE 202008013226 U
(43) Veröffentlichungstag der Anmeldung: 14.04.2010
(73) Patentinhaber: BOWA-electronic GmbH & Co. KG, 72810 Gomaringen (DE)
(72) Erfinder: Böttle, Bernd, 72827 Wannweil (DE)
(74) Vertreter: Schneider, Peter Christian

(56) Entgegenhaltungen:
- EP-A- 1 098 103
- DE-A1- 4 021 568

## Beschreibung

### Gebiet der Erfindung

Die Erfindung bezieht sich auf einen Reibbelagsverschleißsensor mit einem Sensorkörper, der einen in einer Bucht verlegten elektrischen Testleiter trägt und eine in zwei einander gegenüberliegende, erste Körperseitenflächen eingebrachte und die Körperspitze des Sensorkörpers umlaufende, erste Nut aufweist, die im Bereich der Körperspitze senkrecht zu der Bucht des Testleiters verläuft und in die eine nach außen gewölbte Rastwölbungen aufweisende Federklammer eingelegt ist.

### Stand der Technik

Derartige Reibbelagsverschleißsensoren sind aus der DE 40 21 568 A1 bekannt.

Derartige Sensoren werden häufig in Kraftfahrzeugen eingesetzt, um dem Fahrer zu signalisieren, dass ein Bremsbelag eine kritische verschleißgrenze erreicht hat. Das Wirkprinzip solcher Sensoren besteht darin, dass ein elektrischer Testleiter, der sich von der der Reibfläche abgewandten Seite des Belages um eine definierte Tiefe in eine Ausnehmung des Belages hinein erstreckt, bei übermäßigem Verschleiß des Belages während des Reibvorgangs mit der Gegenreibfläche in Kontakt kommt und zerstört wird. Daraufhin kann ein elektrisches Testsignal nicht mehr durch den Testleiter übertragen werden, was von einer geeignet eingerichteten Steuervorrichtung registriert und in ein entsprechendes Warnsignal übersetzt wird. Andere Ausführungsformen zielen nicht auf die Zerstörung des Testleiters, sondern auf seinen elektrischen Kontakt mit der Gegenreibfläche ab, der dann ebenfalls von einer geeignet eingerichteten Steuervorrichtung registriert und in ein Warnsignal übersetzt werden kann.

zur Umsetzung dieses Prinzips ist typischerweise ein kompakter Sensorkörper vorgesehen, der den Testleiter trägt. Der Sensorkörper wird in definierter Weise an einer Belagsträgerplatte befestigt, sodass sich der in einer definierten Bucht geführte Testleiter in exakt definiertem Maß in die entsprechende Ausnehmung des Reibbelags hinein erstrecken kann. Die definierten räumlichen Verhältnisse von Sensorkörper, Testleiter und Belag sind für das zuverlässige Funktionieren der Warnvorrichtung wesentlich, da hierdurch die genaue Lage der Verschleißgrenze bestimmt wird.

Es sind Ausführungsformen bekannt, bei denen der Sensorkörper in eine Ausnehmung der Belagsträgerplatte eingeklebt wird. Dies ist im Hinblick auf die Montage und insbesondere den Austausch des Sensors nachteilig.

Bei dem in der oben genannten, gattungsbildenden DE 40 21 568 A1 offenbarten Sensor ist in dem Sensorkörper eine Nut ausgebildet, die in zwei seiner einander gegenüberliegenden Seitenflächen eingebracht ist und um die Körperspitze herumläuft. Die Nut erstreckt sich nur über einen der Körperspitze benachbarten Teilbereich der Seitenflächen. Am Ende der Nut weisen die Körperseitenflächen je einen Rücksprung auf. In der Nut ist eine Federklammer geführt, die die Körperspitze umgreift und über die Nutenden hinausragend hinter den Rücksprüngen einrastet. Die Federklammer weist zudem nach außen vorgespannte Rastwölbungen auf. Zur Befestigung an der Belagsträgerplatte wird der Sensorkörper in eine entsprechende Tasche der Trägerplatte eingeschoben, wobei die Feder zunächst an den Nutgrund gepresst wird und sich in Montageendstellung wieder etwas entspannen kann, wobei die Rastwölbungen mit entsprechenden Rastvorsprüngen oder -vertiefungen in den Seitenwänden der Tasche verrasten. Auf diese Weise wird der gesamte Sensor mit der Belagsträgerplatte verklipst, sodass er sicher gehaltert ist, bei Bedarf aber ohne Schwierigkeiten entnommen bzw. ausgewechselt werden kann.

Bei Montage und Betrieb besteht die Gefahr, dass der Testleiter beschädigt wird, was je nach Bauart des Sensors zu einem Fehlalarm oder einem Versagen des Sensors führen würde. Um dies zu verhindern ist der Testleiter bei dem bekannten Sensor in das Kunststoffmaterial des Sensorkörpers eingegossen. Zur Herstellung des Sensors wird eine Spritzgussform zunächst mit einem Kernkörper ausgestaltet, um den herum der Testleiter als Bucht gelegt wird. Anschließend wird die Form mit einem thermoplastischen Kunststoff aufgefüllt. Nachteilig bei diesem Sensor sind das komplizierte Spritzgusswerkzeug, die Komplexität des Spritzverfahrens sowie die hohen Ausschusskosten, da bei jedem fehlgespritzten Stück nicht nur der vergleichsweise billige Kunststoffkörper, sondern auch der teurere Testleiter verworfen werden muss. Zudem stellt der bekannte Sensor im Hinblick auf Entsorgung bzw. Recycling ein ungünstiges Kompositprodukt dar.

### Aufgabenstellung

Es ist die Aufgabe der vorliegenden Erfindung, einen Reibbelagsverschleißsensor zur Verfügung zu stellen, der mit geringeren Ausschusskosten herstellbar und leichter recycelbar ist.

### Darlegung der Erfindung

Diese Aufgabe wird in Verbindung mit den Merkmalen des Oberbegriffs von Anspruch 1 dadurch gelöst, dass der Sensorkörper eine zweite Nut aufweist, die in zwei einander gegenüberliegende zweite Körperseitenflächen eingebracht ist und die erste Nut im Bereich der Körperspitze kreuzt, wobei der Testleiter auf dem Nutgrund der zweiten Nut geführt ist.

Der Grundgedanke der vorliegenden Erfindung liegt darin, den Testleiter nicht wie bei den bekannten Sensor in den Sensorkörper einzuspritzen, sondern in einer eigenen Nut zu führen. Hierdurch wird eine separate Herstellung des Sensorkörpers ermöglicht. Der Testleiter kann anschließend in die Nut eingelegt werden. Dabei dient die Nut, deren Nutwand vorzugsweise an jeder Stelle höher ist als die Höhe des Testleiters, als hinreichender Schutz vor unerwünschter mechanischer Beschädigung des Testleiters. Die Nut, in der der Testleiter verläuft, ist etwa um 90 Grad zu der Nut, in die die Federklammer eingelegt ist, versetzt. Hieraus ergibt sich zwangsläufig ein Kreuzungsbereich beider Nuten. Dieser ist im Bereich der Körperspitze angeordnet.

Für die Herstellung wird somit zunächst der Sensorkörper als billiges Kunststoff-Spritzgussteil gefertigt. Anschließend wird maschinell oder manuell der Testleiter in seine Nut eingelegt. In einem abschließenden Arbeitsgang wird die Federklammer in ihre Nut eingelegt, wobei sie im Kreuzungsbereich der Nuten über den Testleiter gestülpt wird. Kommt es während des Spritzgießens zu einem Fehler, so sind die Ausschusskosten sehr gering, da lediglich der billige Kunststoffkörper verworfen werden muss, der zudem zu Granulat verarbeitet und erneut verspritzt werden kann. Auch für die Entsorgung ist der erfindungsgemäße Sensor günstig, da Federklammer, Testleiter und Sensorkörper problemlos voneinander getrennt werden können.

Bevorzugte Ausführungsformen der Erfindung sind Gegenstand der abhängigen Ansprüche.

Günstigerweise ist die zweite Nut im Kreuzungsbereich mit der ersten Nut wenigstens um die Höhe des Testleiters tiefer ausgebildet als die erste Nut. Hierdurch kann erreicht werden, dass die Feder nicht in unmittelbarem Kontakt zu dem Testleiter liegt, was insbesondere bei Ausführungsformen, die einen Massenschluss detektieren, wichtig ist.

Bevorzugt ist vorgesehen, dass eine der zweiten Körperseitenflächen in ihrem der Körperspitze benachbarten Bereich eine nach außen gewölbte Ausbuchtung aufweist, der die zweite Nut folgt. Es handelt sich dabei um eine Ausbuchtung, die sich im Montageendzustand in die Ausnehmung in der Rückseite des Reibbelags hinein erstreckt. Dadurch dass die Nut dieser Ausbuchtung folgt, kann sich auch der Testleiter in diese Ausnehmung hinein erstrecken, wobei sein weitester Erstreckungsgrad die Verschleißgrenze des Belags definiert.

Bevorzugt erstreckt sich die zweite Nut über im Wesentlichen die gesamte Länge der zweiten Körperseitenflächen. Hierdurch kann der Testleiter an dem der Körperspitze abgewandten Ende des Sensorkörpers diesem zugeführt werden, den gesamten Sensorkörper und insbesondere die sich in die Ausnehmung des Reibbelags hinein erstreckende Ausbuchtung sowie die Körperspitze umlaufen und in unmittelbarer Nähe der Zuführstelle wieder vom Sensorkörper abgeführt werden. Es ist daher nur ein gemeinsamer Zu- und Abgang des Testleiters erforderlich.

Hierzu ist an dem der Körperspitze abgewandten Ende des Sensorkörpers ein Stutzen mit Führungskanälen zur Zu- und Abführung des Testleiters zum bzw. vom Sensorkörper angeordnet. Dieser Stutzen kann in Verlängerung der Längserstreckung des sensorkörpers oder abgewinkelt zu dieser ausgerichtet sein.

Die Führungskanäle sind günstigerweise als Nuten in der Außenwand des Stutzens ausgebildet. Diese Ausführungsform gewährt zum einen einen mechanischen Schutz des Testleiters durch die Nuten und gestattet zudem die einfache Montage. Alternativ könnte der Stutzen auch hohl ausgebildet sein, sodass der Testleiter durch den rohrartigen Stutzen hindurch verlegt würde. Dies ist aber im Hinblick auf die Montage ungünstiger und birgt zudem das Problem, dass der Testleiter zur vermeidung eines Kurzschlusses im Inneren des Kanals isoliert sein müsste.

In jedem Fall bietet der Stutzen die zusätzliche Möglichkeit einen Schutzschlauch anzusetzen und zu befestigen. Dieser wird im Fall der Ausbildung der Führungskanäle als Nuten über den Stutzen und den in die Nuten eingelegten Testleiter gestülpt und beispielsweise durch seine eigene Elastizität oder mittels einer Schelle oder auf andere Weise befestigt. Insbesondere kann es sich bei dem Schutzschlauch auch um einen Schrumpfschlauch handeln.

Weitere Merkmale und Vorteile der Erfindung ergeben sich aus der nachfolgenden, speziellen Beschreibung und den Zeichnungen.

### Kurzbeschreibung der Zeichnungen

Es zeigen:
- Figur 1:: eine perspektivische Darstellung einer ersten Ausführungsform eines erfindungsgemäßen Reibbelagsverschleißsensors, gesehen von der Reibbelagsseite,
- Figur 2:: eine perspektivische Darstellung des Sensors von Figur 1, gesehen von der reibbelagsfernen Seite,
- Figur 3:: eine perspektivische Darstellung einer Reibbelagsträgerplatte mit montiertem Reibbelag,
- Figur 4:: eine perspektivische Darstellung des Sensorkörper des Sensors von Figur 1,
- Figur 5:: eine perspektivische Darstellung des Sensorkörpers einer zweiten Ausführungsform des erfindungsgemäßen Sensors.

### Ausführliche Beschreibung bevorzugter Ausführungsformen

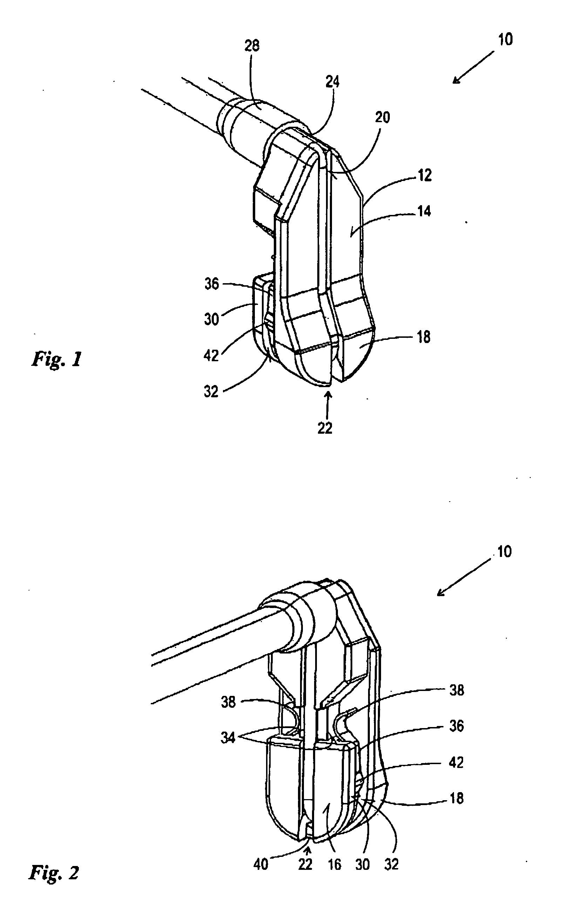

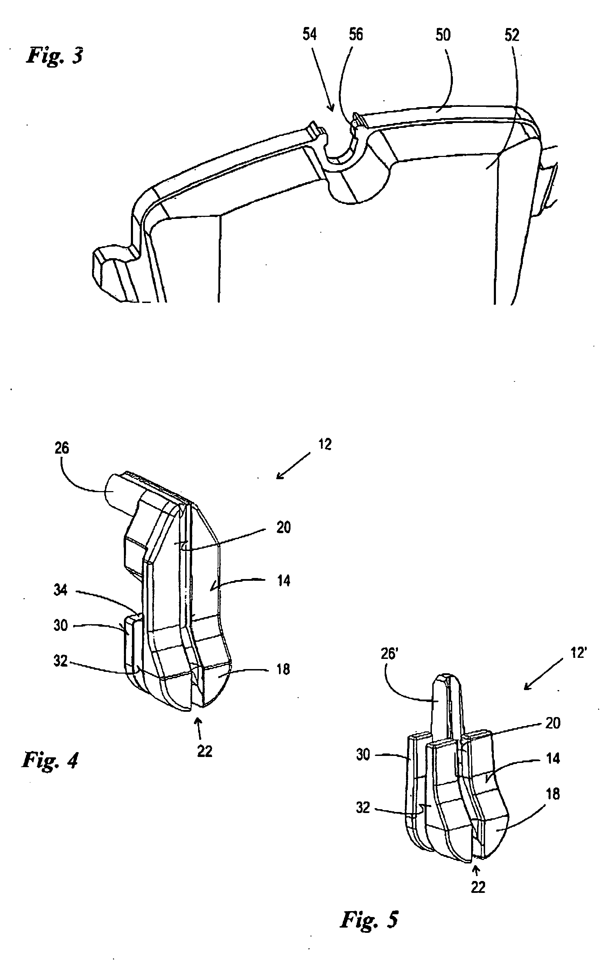

Figur 1 zeigt eine erste Ausführungsform eines erfindungsgemäßen Reibbelagssensors 10 im montagefertigen Zustand. Der Sensor 10 weist einen Sensorkörper 12 auf, der bevorzugt als Kunststoffspritzgussteil ausgebildet ist. Figur 1 zeigt die im Montageendzustand dem Reibbelag zugewandte Körperseitenfläche 14 des Sensorkörpers 12. Figur 2 zeigt hingegen die im Montageendzustand dem Reibbelag abgewandte Seitenfläche 16 desselben Sensors 10. In ihrem in Figur 1 unteren Bereich weist die reibbelagsseitige Fläche 14 eine Ausbuchtung 18 auf, die sich im Montageendzustand in eine entsprechende Ausnehmung des Reibbelags hinein erstreckt. Figur 3 zeigte eine Reibbelagsträgerplatte 50 mit montiertem Reibbelag 52, bereit zur Aufnahme des Sensors 10. Die gesamte reibbelagsseitige Körperwand 14 ist von einer Testleiternut 20 der Länge nach durchsetzt. Die Nut 20 folgt der Ausbuchtung 18, umläuft die Körperspitze 22 und erstreckt sich über die gesamte Länge der reibbelagsabgewandten Fläche 16. In der Testleiternut 20 ist ein elektrischer Testleiter 24 verlegt. Seine Höhe, die im Fall eines Testleiters mit rundem Querschnitt dessen Durchmesser entspricht, ist bevorzugt deutlich geringer als die Tiefe der Testleiternut 20. Auf diese Weise wird ein guter mechanischer Schutz des Testleiters 24 erreicht.

An dem in Figur 1 oberen Ende des Sensorkörpers 12 ist ein in Figur 4 besser erkennbarer, im Wesentlicher rechtwinklig abgewinkelter Stutzen 26 angeordnet, in dem sich die Testleiternut 20 fortsetzt. In Figur 3 ist zwar nur die Fortsetzung der Testleiternut 20 auf der Oberseite des Stutzens erkennbar. Bevorzugt ist die Nut 20 aber auch auf der Unterseite des Stutzens 26 fortgeführt. Über den Stutzen 26 ist ein Schutzschlauch 28 gestülpt, in dessen Innerem der Testleiter 24 zu- bzw. abgeführt wird. Bei einer besonderen Ausführungsform der Erfindung ist die Nut 20 im Bereich des Stutzens geringfügig niedriger als die Höhe des Testleiters 24, wodurch erreicht wird, dass der Testleiter durch den Schutzschlauch 28 am Stutzen 26 festgeklemmt wird.

In den zu den Körperseitenflächen 14 und 16 senkrecht gelegenen Körperseitenflächen 30 ist ebenfalls eine Nut 32 eingebracht. Diese Nut erstreckt sich nicht über die gesamte Länge der Körperseitenflächen 32 sondern endet etwa auf deren Hälfte, wo die Flächen 32 einen Rücksprung 34 aufweisen. In die Federnut 32 ist eine Federklammer 36 eingelegt, die mit ihren Enden 38 hinter den Rücksprüngen 34 verrastet, sodass die Federklammer 36 in Position gehalten wird. zwischen ihren Enden 38 und ihrem Scheitelpunkt 40, der im Bereich der Körperspitze 22 liegt, weist die Federklammer 36 nach außen gewölbte Rastwölbungen 42 auf. Diese verrasten im Montageendzustand mit entsprechenden Vorsprüngen in den seitenwänden einer Tasche 54 der Reibbelagsträgerplatte 50 und fixieren so den Sensor 10 formschlüssig an der Trägerplatte 50.

Wie insbesondere in Figur 2 erkennbar, ist die Testleiternut 20 im Bereich der Körperspitze 22 deutlich tiefer ausgebildet als die sie kreuzende Federnut 32. Hierdurch wird die Federklammer 36 in einem geringen Abstand von dem Testleiter 24 geführt. Dies verhindert einen Massenschluss.

Figur 5 zeigt eine weitere Ausführungsform eines Sensorkörpers 12'. Der Sensorkörper 12' weist im Gegensatz zu dem in Figur 4 gezeigten Sensorkörper 12 einen modifizierten Stutzen 26' auf, der sich in Verlängerung der Längserstreckung des Sensorkörpers 12' erstreckt. Zudem ist der obere Teil des Sensorkörpers 12' kleiner und einfacher gestaltet als der des in Figur 4 gezeigten Sensorkörpers 12. Im Übrigen sind die beiden Sensorkörper 12 und 12' jedoch im wesentlichen gleich aufgebaut, was durch die verwendung gleicher Bezugszeichen angedeutet ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an variationsmöglichkeiten anhand gegeben. Insbesondere kann die spezielle Formgebung des Sensorkörpers abgesehen von den erfindungswesentlichen Merkmalen weitgehend frei vom Fachmann gestaltet werden, um den jeweiligen, insbesondere räumlichen Besonderheiten des konkreten Anwendungsfalles gerecht zu werden.

### Bezugszeichenliste

- 10: Sensor
- 12, 12': Sensorkörper
- 14: reibbelagsseitige Körperseitenfläche
- 16: reibbelagsabgewandte Körperseitenfläche
- 18: Ausbuchtung von 14
- 20: Testleiternut
- 22: Körperspitze von 12
- 24: Testleiter
- 26, 26': Stutzen
- 28: Schutzschlauch
- 30: seitliche Körperseitenfläche
- 32: Federnut
- 34: Rücksprung in 30
- 36: Federklammer
- 38: Ende von 36
- 40: Scheitelpunkt von 36
- 42: Rastwölbung von 36
- 50: Reibbelagsträgerplatte
- 52: Reibbelag

## Patentansprüche

1. Reibbelagsverschleißsensor mit einem Sensorkörper (12, 12'), der einen in einer sucht verlegten elektrischen Testleiter (24) trägt und eine in zwei einander gegenüberliegende, erste Körperseitenflächen eingebrachte und die Körperspitze (22) des Sensorkörpers (12, 12') umlaufende, erste Nut (32) aufweist, die im Bereich der Körperspitze (22) senkrecht zu der Bucht des Testleiters (24) verläuft und in die eine nach außen gewölbte Rastwölbungen (42) aufweisende Federklammer (36) eingelegt ist,
**dadurch gekennzeichnet,**
**dass** der Sensorkörper (12, 12') eine zweite Nut (20) aufweist, die in zwei zweite Körperseitenflächen (16), eingebracht ist und die erste Nut (32) im Bereich der Körperspitze (22) kreuzt, wobei der Testleiter (24) auf dem Nutgrund der zweiten Nut (20) geführt ist.

2. Reibbelagsverschleißsensor nach Anspruch 1,
**dadurch gekennzeichnet,**
**dass** die zweite Nut (20) im Kreuzungsbereich mit der ersten Nut (32) wenigstens um die Höhe des Testleiters (24) tiefer ausgebildet ist als die erste Nut (32).

3. Reibbelagsverschleißsensor nach einem der vorangehenden Ansprüche,
**dadurch gekennzeichnet,**
**dass** eine der zweiten Körperseitenflächen (4) in ihrem der Körperspitze (22) benachbarten Bereich eine nach außen gewölbte Ausbuchtung (18) aufweist, der die zweite Nut (20) folgt.

4. Reibbelagsverschleißsensor nach einem der vorangehenden Ansprüche,
**dadurch gekennzeichnet,**
**dass** sich die zweite Nut (22) über im Wesentlichen die gesamte Länge der zweiten Körperseitenflächen (14, 16) erstreckt.

5. Reibbelagsverschleißsensor nach einem der vorangehenden Ansprüche,
**dadurch gekennzeichnet,**
**dass** an dem der Körperspitze (22) abgewandten Ende des Sensorkörpers (12; 12') ein Stutzen (26, 26') mit Führungskanälen (20) zur Zu- und Abführung des Testleiters (24) zum bzw. vom Sensorkörper (12, 12') angeordnet ist.

6. Reibbelagsverschleißsensor nach Anspruch 5,
**dadurch gekennzeichnet,**
**dass** der Stutzen (26') in Verlängerung der Längserstreckung des Sensorkörpers (12') ausgerichtet ist.

7. Reibbelagsverschleißsensor nach Anspruch 5,
**dadurch gekennzeichnet,**
**dass** der Stutzen (26) abgewinkelt zur Längserstreckung des Sensorkörpers ausgerichtet ist.

8. Reibbelagsverschleißsensor nach einem der Ansprüche 5 bis 7,
**dadurch gekennzeichnet,**
**dass** die Führungskanäle als Nuten (20) in der Außenwand des Stutzens (26; 26') ausgebildet sind.

## Claims

1. A friction lining wear sensor having a sensor body (12, 12'), said body carrying an electrical test conductor (24) arranged in a loop and having a first groove (32) located in two opposite first body side faces and running around the tip (22) of the sensor body (12, 12'), said first groove running perpendicular to the loop formed by the test conductor (24) in the area of the tip (22) of the body, in said first groove there being inserted a spring clip (36) having outwardly protruding detent bulges (42),
**characterized in that**
the sensor body (12, 12') has a second groove (20) that is located in two second body side faces (14, 16) and intersects the first groove (32) in the area of the tip (22) of the body, with the test conductor (24) running at the bottom of the second groove (20).

2. A friction lining wear sensor according to Claim 1,
**characterized in that**
in the area of intersection with the first groove (32) the second groove (20) is deeper than the first groove (32) by at least the height of the test conductor (24).

3. A friction lining wear sensor according to any of the preceding claims,
**characterized in that**
in the area where it is adjacent to the tip (22) of the body, one of the second body side faces (14) has an outwardly bulging section (18) that is followed by the course of the groove (20).

4. A friction lining wear sensor according to any of the preceding claims,
**characterized in that**
the second groove (22) extends over substantially the entire length of the second body side faces (14, 16).

5. A friction lining wear sensor according to any of the preceding claims,
**characterized in that**
at the end of the sensor body (12, 12') facing away from the tip (22) of the body, there is arranged a connecting piece (26, 26') having guide channels (20) for guiding the test conductor (24) to and away from the sensor body (12, 12').

6. A friction lining wear sensor according to Claim 5,
**characterized in that**
the connecting piece (26') is oriented as a longitudinal extension of the sensor body (12').

7. A friction lining wear sensor according to Claim 5,
**characterized in that**
the connecting piece (26) is oriented at an angle to the longitudinal extent of the sensor body.

8. A friction lining wear sensor according to any of Claims 5 to 7,
**characterized in that**
the guide channels are formed as grooves (20) in the outer wall of the connecting piece (26, 26').

## Revendications

1. Capteur d'usure de garniture de friction, avec un corps de capteur (12, 12') qui porte un conducteur électrique de test (24) posé en formant une anse et qui présente une première rainure (32) ménagée dans deux premières faces latérales mutuellement opposées du corps et faisant le tour de la pointe (22) du corps de capteur (12, 12'), rainure qui s'étend dans la région de la pointe (22) du corps perpendiculairement à l'anse formée par le conducteur de test (24) et dans laquelle est logé un étrier à ressort (36) présentant des bombements d'enclenchement (42) bombés vers l'extérieur,
**caractérisé en ce que** le corps de capteur (12, 12') présente une deuxième rainure (20), qui est ménagée dans deux deuxièmes faces latérales (14, 16) du corps et qui croise la première rainure (32) dans la région de la pointe (22) du corps, le conducteur de test (24) étant guidé sur le fond de la deuxième rainure (20).

2. Capteur d'usure de garniture de friction selon la revendication 1, **caractérisé en ce que** la deuxième rainure (20) est réalisée, dans la région d'intersection avec la première rainure (32), plus profonde que la première rainure (32) au moins de la hauteur du conducteur de test (24).

3. Capteur d'usure de garniture de friction selon l'une des revendications précédentes, **caractérisé en ce qu'**une (14) des deuxièmes faces latérales du corps présente, dans sa région voisine de la pointe (22) du corps, un renflement (18) bombé vers l'extérieur qui suit la deuxième rainure (20).

4. Capteur d'usure de garniture de friction selon l'une des revendications précédentes, **caractérisé en ce que** la deuxième rainure (22) s'étend essentiellement sur toute la longueur des deuxièmes faces latérales (14, 16) du corps.

5. Capteur d'usure de garniture de friction selon l'une des revendications précédentes, **caractérisé en ce qu'**un embout (26, 26'), muni de canaux de guidage (20) pour apporter le conducteur de test (24) au corps de capteur (12, 12') et l'en faire repartir, est disposé à l'extrémité du corps de capteur (12 ; 12') qui est opposée à la pointe (22) du corps.

6. Capteur d'usure de garniture de friction selon la revendication 5, **caractérisé en ce que** l'embout (26') est orienté dans le prolongement de l'étendue longitudinale du corps de capteur (12').

7. Capteur d'usure de garniture de friction selon la revendication 5, **caractérisé en ce que** l'embout (26) est orienté en étant coudé par rapport à l'étendue longitudinale du corps de capteur.

8. Capteur d'usure de garniture de friction selon l'une des revendications 5 à 7, **caractérisé en ce que** les canaux de guidage sont réalisés sous la forme de rainures (20) dans la paroi extérieure de l'embout (26 ; 26').
